# EUROPÄISCHE PATENTSCHRIFT

(11) **EP 1 259 315 B1**
(45) Veröffentlichungstag und Bekanntmachung des Hinweises auf die Patenterteilung: **17.03.2004**
(21) Anmeldenummer: 00983071.2
(22) Anmeldetag: 13.11.2000
(51) Int. Cl.: B01J 19/00, G01N 35/00

(54) **SYSTEM ZUR AUTOMATISIERTEN BEHANDLUNG VON FLUIDEN, MIT ANEINANDERREIHBAREN, AUSTAUSCHBAREN PROZESSMODULEN**
SYSTEM FOR CARRYING OUT THE AUTOMATED PROCESSING OF FLUIDS WHICH COMPRISES COMBINABLE AND INTERCHANGEABLE PROCESS MODULES
SYSTEME POUR LE TRAITEMENT AUTOMATISE DE FLUIDES POURVU DE MODULES DE PROCESSUS INTERCHANGEABLES JUXTAPOSABLES

(30) Priorität: 15.11.1999 DE 19954855
(43) Veröffentlichungstag der Anmeldung: 27.11.2002
(73) Patentinhaber: SIEMENS AKTIENGESELLSCHAFT, 80333 München (DE)
(72) Erfinder: HASSEL, Jörg, 91058 Erlangen (DE); STECKENBORN, Arno, 13589 Berlin (DE)
(86) Internationale Anmeldenummer: PCT/DE2000/003994
(87) Internationale Veröffentlichungsnummer: WO 2001/036085

(56) Entgegenhaltungen:
- EP-A- 0 955 473
- US-A- 4 965 880
- US-A- 5 083 364
- US-A- 5 519 635
- US-A- 5 580 523
- BERG VAN DEN A ET AL: "MODULAR CONCEPT FOR MINIATURE CHEMICAL SYSTEMS" DECHEMA MONOGRAPHIEN,VERLAG CHEMIE, WEINHEIM,,DE, Bd. 132, 1995, Seiten 109-123, XP000925640 ISSN: 0070-315X
- ZDEBLICK M J ET AL: "THERMPNEUMATICALLY ACTUATED MICROVALVES AND INTEGRATED ELECTRO- FLUIDIC CIRCUITS" TECHNICAL DIGEST, IEEE SOLID-STATE SENSOR & ACTUATOR WORKSHOP,US,NEW YORK, NY, 13. Juni 1994 (1994-06-13), Seiten 251-255, XP000889674

## Beschreibung

Die Erfindung betrifft ein System zur automatisierten Behandlung von Fluiden, mit aneinanderreihbaren, austauschbaren Prozeßmodulen.

Aus der US-A-5 083 364 ist ein System zur Herstellung von Halbleitersubstraten bekannt, das aus mehreren aneinandergereihten Prozeßmodulen besteht. Die Prozeßmodule werden über einen gemeinsamen Medienbus mit Daten, Energie und benötigen Chemikalien, Gasen und Flüssigkeiten versorgt; die Entsorgung der Fluide erfolgt ebenfalls über den Medienbus. Mindestens eines der Prozeßmodule ist für die Einspeisung der Fluide in den Fluidbus bzw. die Entsorgung der Fluide ausgebildet. Der Medienbus weist elektrische Leitungen für die Daten- und Energieübertragung und unterschiedliche Rohrleitungen für die verschiedenen Fluide auf. In einem durch die Größe der Prozeßmodule vorgegebenen Rasterabstand sind entlang des Medienbusses Anschlußkästen mit elektrischen Anschlüssen und Fluidanschlüssen vorgesehen, an denen die einzelnen Prozeßmodule mit entsprechenden Gegenanschlüssen anschließbar sind. Die Fluidanschlüsse sind mit selbstschließenden Ventilen ausgestattet, die bei nicht vorhandener Verbindung mit den entsprechenden Gegenanschlüssen eines Prozeßmoduls den betreffenden Fluidanschluß nach außen abdichten. Innerhalb des bekannten Systems können daher je nach Anforderung einzelne Prozeßmodule auf vergleichsweise einfache Weise hinzugefügt, entfernt oder ausgetauscht werden.

Der Fluidbus des bekannten Systems ist im Hinblick auf die speziell für die Herstellung von Halbleitersubstraten benötigten Fluide ausgebildet und weist für diese unterschiedliche Rohrleitungen mit zum Teil unterschiedlichen Durchmessern und Querschnitten auf. Die Variabilität und Einsatzmöglichkeit des bekannten Systems ist daher auf diesen speziellen Herstellungsprozeß beschränkt.

Aus der EP-A-0 303 565 ist ein System zur Herstellung insbesondere eines chemischen Produkts bekannt. Die unterschiedlichen Herstellungsschritte erfolgen in unterschiedlichen feststehenden oder mobilen Prozeßmodulen, die jeweils eine Steuerungseinheit und eine Chemieeinheit umfassen, wobei innerhalb der Chemieeinheit der betreffende Herstellungsschritt gesteuert durch die Steuerungseinheit ausgeführt wird. Die Steuerungseinheiten der unterschiedlichen Prozeßmodule sind über Datenleitungen an einem Prozeßleitsystem angeschlossen. Die Chemieeinheiten innerhalb der Prozeßmodule werden individuell über Ver- und Entsorgungsleitungen mit den bei der Herstellung benötigten bzw. anfallenden Stoffen versorgt bzw. entsorgt. Die angestrebte Modularität und Flexibilität ist daher im wesentlichen steuerungsseitig, nicht jedoch prozeßseitig ausgebildet.

Der Erfindung liegt die Aufgabe zugrunde, ein System zur automatisierten Behandlung von Fluiden mit höchstmöglicher Modularität und damit verbundener Flexibilität anzugeben.

Gemäß der Erfindung wird die Aufgabe gelöst durch ein System zur automatisierten Behandlung von Fluiden, mit aneinanderreihbaren, austauschbaren Prozeßmodulen, die jeweils eine Steuerungseinheit und eine von dieser zur Durchführung einer modulspezifischen Prozeßfunktion im Rahmen der Behandlung der Fluide steuerbare Fluideinheit aufweisen, wobei die Steuerungseinheiten über einen den Prozeßmodulen gemeinsamen Datenbus und die Fluideinheiten über einen mehrere Kanäle aufweisenden Fluidbus miteinander verbunden sind und wobei die Konfiguration zumindest eines Teils der Kanäle des Fluidbusses in den Bereichen seiner Verbindung mit den Fluideinheiten jeweils über Konfigurationseinrichtungen einstellbar ist. Unter Behandlung von Fluiden ist dabei insbesondere deren Analyse oder Synthese einschließlich der dazu erforderlichen Nebenfunktionen zu verstehen, wobei es sich bei den Fluiden um Flüssigkeiten, Gase oder mittels Trägerfluiden transportierte Feststoffe handeln kann.

Aufgrund der Einstellbarkeit der Kanalkonfiguration in den Verbindungsbereichen einzelner Prozeßmodule mit dem Fluidbus ist bei dem erfindungsgemäßen System eine weitestgehende Modularität und Flexibilität nicht nur steuerungsseitig sondern auch auf der Prozeßseite gewährleistet, weil im Unterschied zu den bekannten Systemen keine feste Vorbelegung der Kanäle erfolgt. So können je nach eingestellter Konfiguration die Fluideinheiten gleichartiger Prozeßmodule bedarfsgemäß mit unterschiedlichen Kanälen des Fluidbusses verbunden werden. Vorzugsweise sind über die Konfigurationseinrichtungen einzelne Kanalabschnitte zwischen benachbarten Prozeßmodulen abschaltbar, so daß beispielsweise ein Kanal beiderseits eines Prozeßmoduls mit unterschiedlichen Fluiden belegt werden kann. Im weiteren können einzelne Kanäle zwischen unterschiedlichen vorgegebenen Prozeßmodulen entsprechend der in ihrem Bereich jeweils eingestellten Kanalkonfiguration abschnittsweise mit einem Fluid belegt werden. Auch können einzelne Kanäle oder Kanalabschnitte parallel geschaltet werden, um einen größeren Durchflußquerschnitt zu erhalten.

Die Konfigurationseinrichtungen können jeweils als Adapter ausgebildet sein, über den das jeweilige Prozeßmodul an den Fluidbus anschaltbar ist. Je nach verwendetem Adapter ergibt sich damit eine unterschiedliche Verschaltung zwischen den Kanälen des ankommenden und abgehenden Fluidbusses und den Fluidein- und ausgängen der Fluideinheit in dem jeweiligen Prozeßmodul.

Der Adapter weist vorzugsweise eine Informationsschnittstelle zu dem angeschalteten Prozeßmodul zur Übertragung einer Information über die eingestellte Konfiguration an die moduleigene Steuerungseinheit auf, die dazu ausgebildet ist, diese Information über den Datenbus an eine übergeordnete Steuereinrichtung und/oder an die Steuerungseinheiten in den jeweils anderen Prozeßmodulen zu melden. Die eingestellten Kanalkonfigurationen sind dann beispielsweise auf einer Visualisierungseinrichtung der übergeordneten Steuereinrichtung darstellbar oder stehen als Informationen für die jeweils anderen Prozeßmodule zur Verfügung, so daß Fehlbelegungen der Kanäle, wie z.B. eine ungewollte Einleitung zweier unterschiedlicher Fluide in ein und denselben Kanal bzw. Kanalabschnitt, erkannt werden können. Die Information über die durch den jeweiligen Adapter eingestellte Kanalkonfiguration kann beispielsweise in Form einer Kodierung vorliegen, die von der Steuerungseinheit in dem zugehörigen Prozeßmodul lesbar ist.

Entsprechend einer alternativen Ausbildung des erfindungsgemäßen Systems wird der Fluidbus von internen Fluidbusabschnitten innerhalb der aneinandergereihten Prozeßmodule gebildet, wobei die Konfigurationseinrichtungen als Konfigurationsmodule ausgebildet sind, die in die Reihe der Prozeßmodule zwischen einzelnen Prozeßmodulen einfügbar sind. Je nach verwendetem Konfigurationsmodul ergibt sich somit eine unterschiedliche Verschaltung der Kanäle benachbarter Prozeßmodule.

Die Konfigurationsmodule weisen vorzugsweise jeweils eine an dem Datenbus angeschlossene Konfigurationsmeldeeinheit zur Übertragung einer Information über die eingestellte Konfiguration über den Datenbus an eine übergeordnete Steuereinrichtung und/oder an die Steuerungseinheiten in den Prozeßmodulen auf, so daß auch hier die eingestellten Kanalkonfigurationen beispielsweise auf einer Visualisierungseinrichtung der übergeordneten Steuereinrichtung darstellbar sind oder als Informationen für die Prozeßmodule zur Verfügung stehen, so daß Fehlbelegungen der Kanäle erkannt werden können.

Schließlich können die Konfigurationseinrichtungen auch jeweils Bestandteil zumindest einzelner Prozeßmodule sein, wobei sie zur Einstellung der jeweiligen Kanalkonfiguration durch die moduleigene Steuerungseinheit (6) steuerbar sind. Damit kann, beispielsweise von zentraler Stelle aus, über den Datenbus und die Steuerungseinheiten in den einzelnen Prozeßmodulen eine automatische Konfiguration des gesamten Fluidbusses erfolgen.

Die steuerbare Konfigurationseinrichtung weist vorzugsweise steuerbare Ventile im Verlauf der Kanäle des Fluidbusses und im Verlauf von Kanalabzweigungen zu der jeweiligen Fluideinheit auf. Es können dabei Einwegventile oder die Funktionen mehrerer Einwegventile zusammenfassende Mehrwegventile vorgesehen sein.

Die Steuerungseinheiten sind vorzugsweise jeweils dazu ausgebildet, die einstellte Konfiguration der Kanäle über den Datenbus an eine an dem Datenbus angeschlossene übergeordnete Steuereinrichtung und/oder an die Steuerungseinheiten in den jeweils anderen Prozeßmodulen zu melden. Die eingestellten Kanalkonfigurationen sind dann beispielsweise auf einer Visualisierungseinrichtung der übergeordneten Steuereinrichtung darstellbar oder stehen als Informationen für die jeweils anderen Prozeßmodule zur Verfügung, so daß deren Steuerungseinheiten die von ihnen gesteuerten Konfigurationen der Kanäle in Abhängigkeit von den in den jeweils anderen Prozeßmodulen eingestellten Konfigurationen einstellen können. Auf diese Weise können wirkungsvoll Fehlbelegungen der Kanäle erkannt bzw. vermieden werden.

Der Fluidbus ist vorzugsweise von internen Fluidbusabschnitten innerhalb der aneinandergereihten Prozeßmodule gebildet, so daß der durch das Aneinanderreihen der für das jeweils aufzubauende System benötigten Prozeßmodule automatisch gebildet wird.

Der Fluidbus kann zumindest teilweise in Mikrosystemtechnik oder einer vergleichbaren Technik ausgebildet sein, wobei z.B. ausgehend von lithographischen Verfahren zur Strukturübertragung eine dreidimensionale Formgebung, hier der Kanäle, mit unterschiedlichen mikromechanischen Prozessen, wie z.B. anisotropes Ätzen von Silizium, Mikrogalvanikprozesse, Laserprozesse usw. erreicht werden kann. In entsprechender Weise sind vorzugsweise auch die Konfigurationseinrichtungen in Mikrosystemtechnik ausgebildet.

Um insbesondere im Hinblick auf die Ausbildung des Fluidbusses in Mikrosystemtechnik eine präzise Verbindung der einzelner Fluidbusabschnitte untereinander zu erreichen, und darüber hinaus das Aneinanderreihen der unterschiedlichen Prozeßmodule zu vereinfachen, sind diese vorzugsweise an einem gemeinsamen Träger, z.B. einer Hutschiene gehalten.

Zur weiteren Erläuterung der Erfindung wird im folgenden auf die Figuren der Zeichnung bezug genommen; im einzelnen zeigen
- Figur 1: ein erstes Ausführungsbeispiel des aus unterschiedlichen Prozeßmodulen gebildeten erfindungsgemäßen Systems in Form eines vereinfachten Blockschaltbildes,
- Figur 2: ein Beispiel für eines der Prozeßmodule,
- Figur 3: ein beispielhaftes Blockschaltbild eines der Prozeßmodule,
- Figur 4: ein zweites Ausführungsbeispiel des erfindungsgemäßen Systems und
- Figur 5: ein drittes Ausführungsbeispiel des erfindungsgemäßen Systems

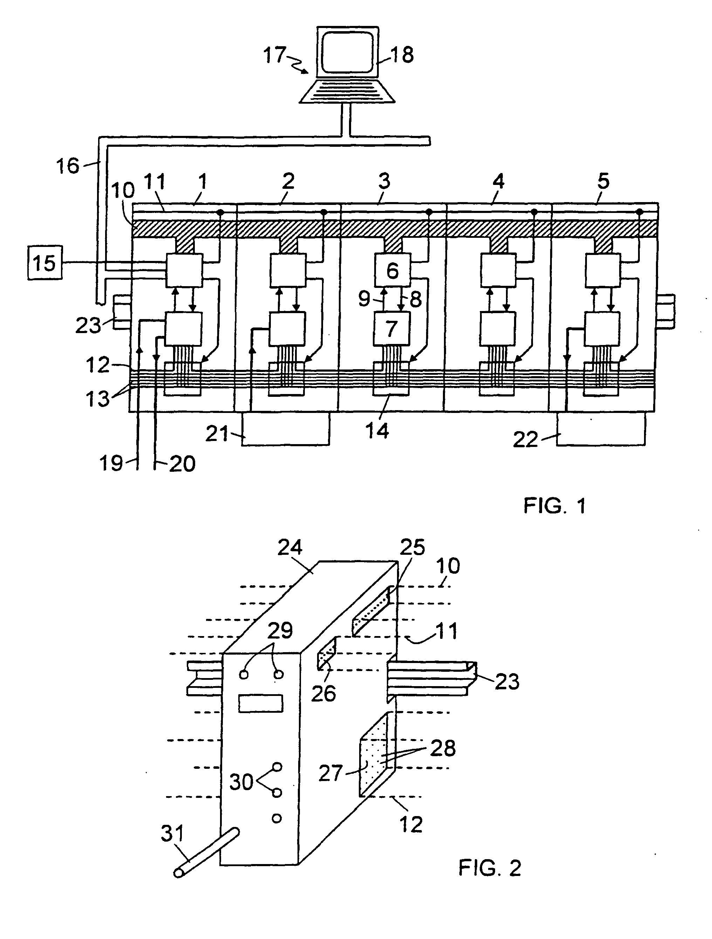

Figur 1 zeigt ein System zur automatisierten Behandlung von Fluiden, z.B. unterschiedliche Flüssigkeiten oder Gase. Unter Behandlung ist zum Beispiel die Analyse der Fluide oder die Synthese durch chemische Reaktionen von Fluiden einschließlich der dazu erforderlichen Nebenfunktionen wie Aufbereiten, Mischen, Filtrieren, Förderung oder Druckaufbau mittels Pumpen, Erwärmung, Verdampfung usw. zu verstehen. Das System besteht aus unterschiedlichen aneinandergereihten Prozeßmodulen 1, 2, 3, 4 und 5, in denen modulspezifische Prozeßfunktionen automatisiert ausgeführt werden. Bei den Prozeßmodulen 1 bis 5 kann es sich entsprechend den oben genannten Behandlungsfunktionen um verschiedenartige Analysenmodule, Reaktormodule mit beispielsweise Mikroreaktoren, Pumpenmodule, Filtermodule, Energieversorgungsmodule, Fluidversorgungs- und -entsorgungsmodule usw. handeln. Jedes Prozeßmodul 1 bis 5 weist jeweils eine Steuerungseinheit 6 und eine Fluideinheit 7 auf, wobei die eigentliche Prozeß- oder Behandlungsfunktion der innerhalb der Fluideinheit 7 in Abhängigkeit von Steuersignalen 8 der Steuerungseinheit 6 ausgeführt wird. In der Fluideinheit 7 aufgenommene Prozeßsignale 9, z.B. Druckwerte oder Analysenwerte, werden an die Steuerungseinheit 6 übertragen. Die Steuerungseinheiten 6 in den unterschiedlichen Prozeßmodulen 1 bis 5 sind über einen Datenbus 10 und einen Energieversorgungsbus 11 miteinander verbunden. Die Fluideinheiten 7 sind über einen Fluidbus 12 miteinander verbunden, der aus einer Mehrzahl von parallelen Kanälen 13 besteht, in denen die jeweils benötigten Fluide geführt werden. Im Bereich der Verbindung des Fluidbusses 12 mit den einzelnen Fluideinheiten 7 in den Prozeßmodulen 1 bis 5 ist jeweils eine durch die Steuerungseinheit 6 steuerbare Konfigurationseinrichtung 14 vorgesehen, über die, wie untenstehend erläutert wird, die Konfiguration der Kanäle 13 einstellbar ist.

Die Prozeßmodule 1 bis 5 können zusätzlich zu den Verbindungen mit dem Datenbus 10, dem Energieversorgungsbus 11 und dem Fluidbus 12 weitere externe Anschlüsse aufweisen. Bei dem gezeigten Beispiel dient das Prozeßmodul 1 zur Bereitstellung von Grundfunktionen für das System, wozu die Steuerungseinheit 6 an einer externen Stromversorgungsquelle 15 und über eine Datenverbindung, z.B. einen externen Bus 16, an eine übergeordnete Steuereinrichtung 17 mit Visualisierungseinrichtung 18 angeschlossen ist. An der Fluideinheit 7 sind externe Fluidleitungen 19 und 20 zur Einspeisung bzw. zum Abführen benötigter Fluide in das System angeschlossen. Für die Energieversorgung kommt alternativ auch ein Batterieoder Brennstoffzellenmodul in Betracht. Bei dem Prozeßmodul 2 erfolgt die Einspeisung eines Fluids in das System über einen an das Prozeßmodul 2 ansteckbaren Versorgungsbehälter 21, während z.B. an dem Prozeßmodul 5 ein Entsorgungsbehälter 22 zur Aufnahme eines Fluids aus dem System angesteckt ist.

Wie hier schematisch dargestellt ist, sind der Datenbus 10, der Energieversorgungsbus 11 und der Fluidbus 12 jeweils aus internen Busabschnitten innerhalb der aneinandergereihten Prozeßmodule 1 bis 5 gebildet, wobei die Prozeßmodule 1 bis 5 auf einem gemeinsamen Träger, hier in Form einer Hutschiene 23, nebeneinander gehalten sind. Durch Aufschieben oder Aufstecken der jeweils benötigten Prozeßmodule 1 bis 5 auf die Hutschiene 23 werden so die Busse 10 bis 12 gebildet.

Figur 2 zeigt ein einzelnes, auf der Hutschiene 23 aufgeschobenes Prozeßmodul 24 mit seitlich ausgebildeten Busschnittstellen 25, 26 und 27 zur Verbindung der hier nicht gezeigten internen Busabschnitte mit denen der jeweils benachbarten Prozeßmodule zu dem Datenbus 10, dem Energieversorgungsbus 11 bzw. dem Fluidbus 12.

Die Busschnittstelle 27 für den Fluidbus 12 ist in Mikrosystemtechnik ausgeführt und weist etwa 20 bis 50 Kanalöffnungen 28 auf. Wie Figur 2 ferner zeigt, ist das Prozeßmodul 24 auf seiner Vorderseite mit Anzeigeelementen 29 und Bedienelementen 30 zur Anzeige bzw. Eingabe von Grundeinstellungen des Prozeßmoduls 24 versehen. Ferner ist beispielhaft eine externe Versorgungsleitung 31 zur Einspeisung eines Fluids in das von dem Prozeßmodul 24 und den anderen hier nicht gezeigten Prozeßmodulen gebildetes System zu sehen.

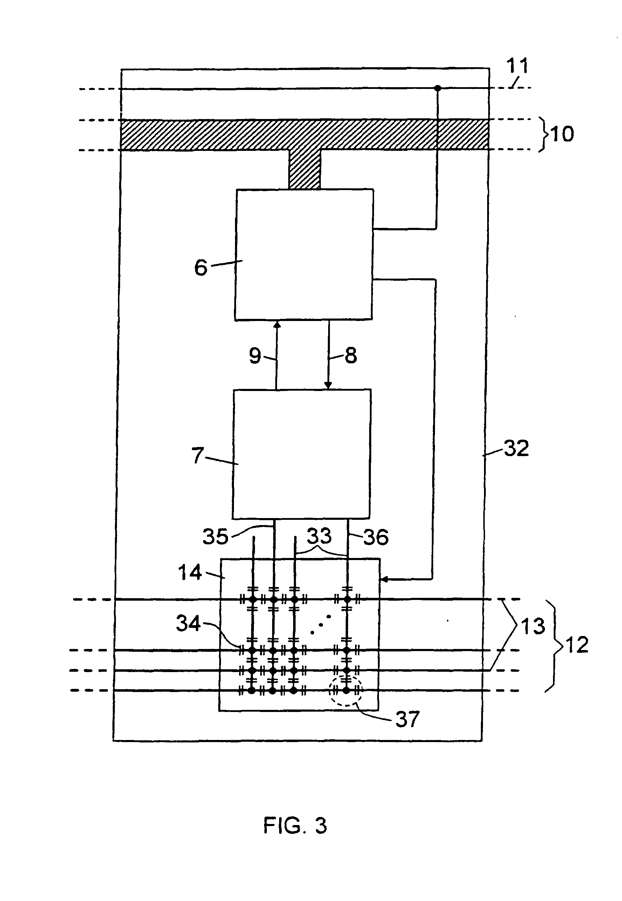

Figur 3 zeigt ein schematisches Blockschaltbild eines Prozeßmoduls 32 mit der darin befindlichen Steuerungseinheit 6, der Fluideinheit 7, der Konfigurationseinrichtung 14 und den innerhalb des Prozeßmoduls 32 ausgebildeten Busabschnitten des Datenbusses 10, des Energieversorgungsbusses 11 und des Fluidbusses 12 mit den Kanälen 13. Die Konfigurationseinrichtung 14 weist im Verlauf der Kanäle 13 und im Verlauf von Kanalabzweigungen 33 zu der Fluideinheit 7 z.B. in Mikrosystemtechnik ausgebildete steuerbare Ventile 34 auf, die durch die Steuerungseinheit 6 einzeln schaltbar sind. Durch die Schaltung der Ventile 34 läßt sich die Konfiguration der Kanäle 13 im Bereich der Verbindung des Fluidbusses 12 mit der Fluideinheit 7 in der Weise einstellen, daß vorgegebene Ein- und Ausgänge 35, 36 der Fluideinheit 7 mit vorgebbaren Kanälen 13 verbindbar sind, Kanalabschnitte zu den jeweils benachbarten, hier nicht gezeigten Prozeßmodulen gesperrt werden können oder einzelne Kanäle 13 zwischen unterschiedlichen Prozeßmodulen abschnittsweise mit einem Fluid belegt werden können. Die Einstellung der Konfiguration der Kanäle 13 in den Prozeßmodul 32 wird von der Steuerungseinheit 6 über den Datenbus 10 an die übergeordnete Steuereinrichtung 17 gemeldet und dort auf der Visualisierungseinrichtung 18 dargestellt, so daß auf diese Weise ein Überblick über die Kanalkonfiguration des gesamten Fluidbusses 12 gegeben werden kann. Von der Steuereinrichtung 17 aus kann die Konfiguration der Kanäle 13 des Fluidbusses 12 in jedem der einzelnen Prozeßmodule 1 bis 5, 24, 32 vorgenommen werden. Die Ventile 34 können, wie hier gezeigt, als Einwegventile ausgebildet sein, wobei alternativ jeweils mehrere der Einwegventile, z.B. die mit 37 markierten Ventile, durch ein einzelnes Mehrwegventil ersetzt werden können.

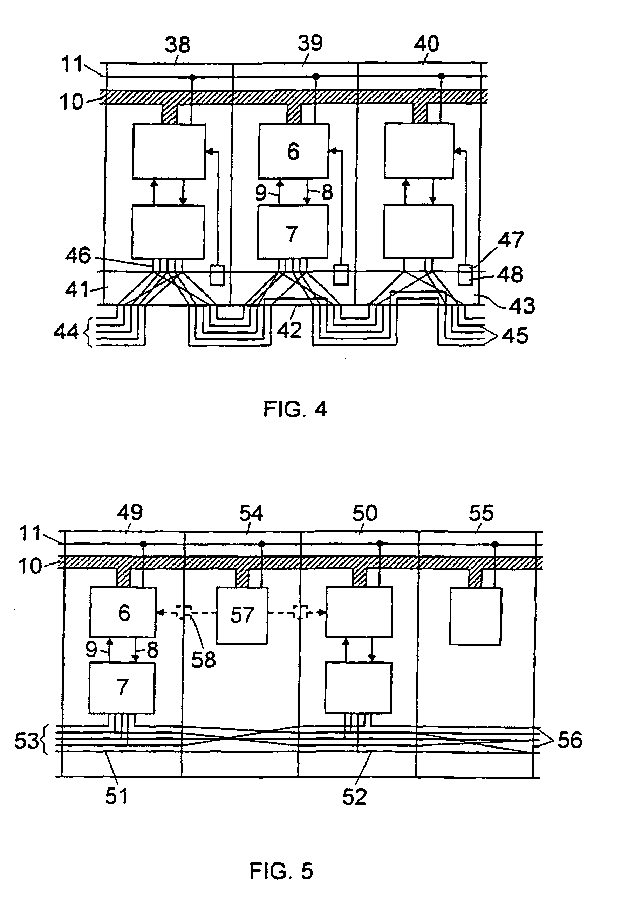

Bei dem in Figur 4 gezeigten Beispiel des erfindungsgemäßen Systems weisen die Prozeßmodule 38, 39 und 40 entsprechend den zuvor beschriebenen Beispielen jeweils eine Steuerungseinheit 6 und eine Fluideinheit 7 auf, wobei die Steuerungseinheiten 6 über einen Datenbus 10 und einen Energieversorgungsbus 11 untereinander verbunden sind. Die Konfigurationseinrichtungen sind hier in Form von Adaptern 41, 42 und 43 ausgebildet, über die die Prozeßmodule 38, 39 und 40 mit ihren jeweiligen Fluideinheiten 7 an einen Fluidbus 44 angeschaltet sind. Je nach verwendetem Adapter 41 bis 43 ergibt sich damit eine unterschiedliche Verschaltung zwischen den Kanälen 45 des ankommenden und abgehenden Fluidbusses 44 und den Fluidein- und ausgängen 46 der Fluideinheit 7 in dem jeweiligen Prozeßmodul 38 bis 40. Jeder Adapter, z.B. 43, weist jeweils eine Informationsschnittstelle 47 zu dem angeschalteten Prozeßmodul, z.B. 40, zur Übertragung einer Information über die eingestellte Konfiguration an die moduleigene Steuerungseinheit 6 auf, wobei die Steuerungseinheit 6 diese Information entsprechend dem in Figur 1 gezeigten Beispiel über den Datenbus 10 an eine übergeordnete Steuereinrichtung 17 weitergibt. Die entsprechende Information ist hier z.B. als Kodierung in einem Chip 48 des Adapters 43 abgelegt, so daß die Information von der Steuerungseinheit 6 über die Informationsschnittstelle 47 ausgelesen werden kann.

Bei dem in Figur 5 gezeigten Beispiel des erfindungsgemäßen Systems weisen die Prozeßmodule 49 und 50 entsprechend den zuvor beschriebenen Beispielen jeweils eine Steuerungseinheit 6 und eine Fluideinheit 7 auf, wobei die Steuerungseinheiten 6 wiederum über einen Datenbus 10 und einen Energieversorgungsbus 11 untereinander verbunden sind. Die Fluideinheiten 7 sind an innerhalb der Prozeßmodule 49 und 50 ausgebildeten Fluidbusabschnitten 51 bzw. 52 angeschlossen, wobei die Fluidbusabschnitte 51 bzw. 52 aller aneinandergereihten Prozeßmodule 49 und 50 den Fluidbus 53 des Systems bilden. Die Konfigurationseinrichtungen sind hier als Konfigurationsmodule 54 und 55 ausgebildet, die in die Reihe der Prozeßmodule zwischen einzelnen Prozeßmodulen, hier 49 und 50, einfügbar sind. Je nach verwendetem Konfigurationsmodul 54 bzw. 55 ergibt sich eine unterschiedliche Verschaltung der Kanäle 56 benachbarter Prozeßmodule 49 und 50.

Die Konfigurationsmodule 54 und 55 weisen hier jeweils eine an dem Datenbus 10 angeschlossene Konfigurationsmeldeeinheit 57 zur Übertragung einer Information über die eingestellte Konfiguration über den Datenbus 10 an eine übergeordnete Steuereinrichtung (17, Figur 1) auf. Wie gestrichelt angedeutet ist, können diese Informationen alternativ auch entsprechend dem in Figur 4 beschriebenen Beispiel als Kodierungen über Informationsschnittstellen 58 von den Steuerungseinheiten 6 der unmittelbar benachbarten Prozeßmodule 49 bzw. 50 gelesen und anschließend auf den Datenbus 10 gegeben werden.

## Patentansprüche

1. System zur automatisierten Behandlung von Fluiden mit unterschiedlichen, aneinanderreihbaren, austauschbaren Prozeßmodulen (1 bis 5; 24; 32; 38, 39, 40; 49, 50), die im Rahmen der Behandlung der Fluide unterschiedliche modulspezifische Prozeßfunktiopnen durchführen und dazu jeweils eine Steuerungseinheit (6) und eine von dieser zur Durchführung der modulspezifischen Prozeßfunktion steuerbare Fluideinheit (7) aufweisen, wobei die Steuerungseinheiten (6) über einen den Prozeßmodulen (1 bis 5; 24; 32; 38, 39, 40; 49, 50) gemeinsamen Datenbus (10) und die Fluideinheiten (7) über einen mehrere Kanäle (13; 45; 56) aufweisenden Fluidbus (12; 44; 53) miteinander verbunden sind und wobei die Konfiguration zumindest eines Teil der Kanäle (13) des Fluidbusses (12; 44; 53) in den Bereichen seiner Verbindung mit den Fluideinheiten (7) über Konfigurationseinrichtungen (14; 41, 42, 43; 54, 55) einstellbar ist.

2. System nach Anspruch 1, **dadurch gekennzeichnet, daß** die Konfigurationseinrichtungen jeweils als Adapter (41, 42, 43) ausgebildet sind, über den das jeweilige Prozeßmodul (38, 39, 40) an den Fluidbus (44) anschaltbar ist. (Figur 4)

3. System nach Anspruch 2, **dadurch gekennzeichnet, daß** der Adapter (41, 42, 43) eine Informationsschnittstelle (47) zu dem angeschalteten Prozeßmodul (38, 39, 40) zur Übertragung einer Information über die eingestellte Konfiguration an die moduleigene Steuerungseinheit (6) aufweist und daß die Steuerungseinheit (6) jeweils dazu ausgebildet ist, diese Information über den Datenbus (10) an eine übergeordnete Steuereinrichtung (17) und/oder an die Steuerungseinheiten (6) in den jeweils anderen Prozeßmodulen (38, 39, 40) zu melden.

4. System nach Anspruch 1, **dadurch gekennzeichnet, daß** der Fluidbus (53) des Systems von internen Fluidbusabschnitten (51, 52) innerhalb der aneinander

5. System nach Anspruch 4, **dadurch gekennzeichnet, daß** die Konfigurationsmodule (54, 55) jeweils eine an dem Datenbus (10) angeschlossene Konfigurationsmeldeeinheit (57) zur Übertragung einer Information über die eingestellte Konfiguration über den Datenbus (10) an eine übergeordnete Steuereinrichtung (17) und/oder an die Steuerungseinheiten (6) in den Prozeßmodulen (49, 50) aufweist.

6. System nach Anspruch 1, **dadurch gekennzeichnet, daß** die Konfigurationseinrichtungen (14) jeweils Bestandteil zumindest einzelner Prozeßmodule (1 bis 5; 24; 32) sind und daß sie zur Einstellung der Konfiguration der Kanäle (13) des Fluidbusses (12) durch die moduleigene Steuerungseinheit (6) steuerbar sind. (Figur 1)

7. System nach Anspruch 6, **dadurch gekennzeichnet, daß** die Konfigurationseinrichtungen (14) jeweils steuerbare Ventile (34) im Verlauf der Kanäle (13) des Fluidbusses (12) und im Verlauf von Kanalabzweigungen (33) zu der jeweiligen Fluideinheit (7) aufweisen.

8. System nach Anspruch 6 oder 7, **dadurch gekennzeichnet, daß** die Steuerungseinheiten (6) jeweils dazu ausgebildet sind, die eingestellte Konfiguration der Kanäle (13) über den Datenbus (10) an eine übergeordnete Steuereinrichtung (17) und/oder an die Steuerungseinheiten (6) in den jeweils anderen Prozeßmodulen (1 bis 5; 24; 32) zu melden.

9. System nach Anspruch 8, **dadurch gekennzeichnet, daß** die Steuerungseinheiten (6) jeweils dazu ausgebildet sind, die Konfiguration der Kanäle (13) in Abhängigkeit von den von den Steuerungseinheiten (6) in den jeweils anderen Prozeßmodulen (1 bis 5; 24; 32) gemeldeten Konfigurationen einzustellen.

10. System nach einem der Ansprüche 6 bis 9, **dadurch gekennzeichnet, daß** der Fluidbus (12) des Systems von internen Fluidbusabschnitten innerhalb der aneinandergereihten Prozeßmodule (1 bis 5; 24; 32) gebildet ist.

11. System nach einem der vorangehenden Ansprüche, **dadurch gekennzeichnet, daß** über die Konfigurationseinrichtungen einzelne Kanalabschnitte zwischen benachbarten Prozeßmodulen abschaltbar sind.

12. System nach einem der vorangehenden Ansprüche, **dadurch gekennzeichnet, daß** über die Konfigurationseinrichtungen einzelne Kanäle zwischen unterschiedlichen vorgegebenen Prozeßmodulen abschnittsweise mit einem Fluid belegbar sind.

13. System nach einem der vorangehenden Ansprüche, **dadurch gekennzeichnet, daß** der Fluidbus zumindest in teilweise in Mikrosystemtechnik ausgebildet ist.

14. System nach einem der vorangehenden Ansprüche, **dadurch gekennzeichnet, daß** die Konfigurationseinrichtungen in Mikrosystemtechnik ausgebildet sind.

15. System nach einem der vorangehenden Ansprüche, **dadurch gekennzeichnet, daß** die aneinandergereihten Prozeßmodule (1 bis 5; 24; 32) an einem gemeinsamen Träger (23) gehalten sind.

## Claims

1. System for carrying out the automated processing of fluids with different, juxtaposable, interchangeable process modules (1 to 5; 24; 32; 38, 39, 40; 49, 50), which execute different, module-specific process functions in the framework of fluid processing and for this purpose each have a control unit (6) and a fluid unit (7) controllable by the former to carry out the module-specific process function, the control units (6) being connected to one another via a data bus (10) common to the process modules (1 to 5; 24; 32; 38, 39, 40; 49, 50) and the fluid units (7) being connected to one another via a fluid bus (12; 44; 53) comprising a plurality of conduits (13; 45; 56) and the configuration of at least a portion of the conduits (13) of the fluid bus (12; 44; 53) being adjustable in the areas of its connection to the fluid units (7) via configuration devices (14; 41, 42, 43; 54, 55).

2. System according to claim 1, **characterized in that** the configuration devices are formed respectively as adapters (41, 42, 43), via which the respective process module (38, 39, 40) is connectable to the fluid bus (44). (Figure 4)

3. System according to claim 2, **characterized in that** the adapter (41, 42, 43) has an information interface (47) with the connected process module (38, 39, 40) for transmitting information regarding the set configuration to the control unit (6) within the module and that the control unit (6) is formed respectively to report this information via the data bus (10) to a higher-level control device (17) and/or to the control units (6) in the other process modules (38, 39, 40) respectively.

4. System according to claim 1, **characterized in that** the fluid bus (53) of the system is formed from internal fluid bus sections (51, 52) inside the juxtaposed process modules (49, 50) and that the configuration devices are formed as configuration modules (54, 55), which are insertable into the row of process modules (49, 50) between individual process modules (49, 50). (Figure 5)

5. System according to claim 4, **characterized in that** the configuration modules (54, 55) each have a configuration signalling unit (57) connected to the data bus (10) for transmitting information regarding the set configuration via the data bus (10) to a higher-level control device (17) and/or to the control units (6) in the process modules (49, 50).

6. System according to claim 1, **characterized in that** the configuration devices (14) are each a part of at least individual process modules (1 to 5; 24; 32) and that they are controllable by the control unit (6) in the module for adjusting the configuration of the conduits (13) of the fluid bus (12). (Figure 1)

7. System according to claim 6, **characterized in that** the configuration devices (14) each have controllable valves (34) in the path of the conduits (13) of the fluid bus (12) and in the path of conduit branches (33) to the respective fluid unit (7).

8. System according to claim 6 or 7, **characterized in that** the control units (6) are each formed to report the set configuration of the conduits (13) via the data bus (10) to a higher-level control device (17) and/or to the control units (6) in the other process modules (1 to 5; 24; 32) respectively.

9. System according to claim 8, **characterized in that** the control units (6) are each formed to adjust the configuration of the conduits (13) depending on the configurations reported by the control units (6) in the other process modules (1 to 5; 24; 32) respectively.

10. System according to one of the claims 6 to 9, **characterized in that** the fluid bus (12) of the system is formed by internal fluid bus sections inside the juxtaposed process modules (1 to 5; 24; 32).

11. System according to one of the preceding claims, **characterized in that** single conduit sections between adjacent process modules can be disconnected via the configuration devices.

12. System according to one of the preceding claims, **characterized in that** individual conduits between different predetermined process modules can be occupied in sections with fluid via the configuration devices.

13. System according to one of the preceding claims, **characterized in that** the fluid bus is formed at least partly in microsystem technology.

14. System according to one of the preceding claims, **characterized in that** the configuration devices are formed in microsystem technology.

15. System according to one of the preceding claims, **characterized in that** the juxtaposed process modules (1 to 5; 24; 32) are held on a common carrier (23).

## Revendications

1. Système de traitement automatisé de fluides comprenant différents modules de processus interchangeables et juxtaposables (1 à 5 ; 24 ; 32 ; 38, 39, 40 ; 49, 50) qui réalisent dans le cadre du traitement du fluide différentes fonctions de processus spécifiques à chaque module et qui comportent à cet effet chacun une unité de commande (6) et une unité de fluide (7) commandable par celle-ci pour la mise en oeuvre d'une fonction de processus spécifique au module, les unités de commande (6) étant reliées entre elles par un bus de données (10) commun aux modules de processus (1 à 5 ; 24 ; 32 ; 38, 39, 40 ; 49, 50) et les unités de fluide (7) étant reliées entre elles par un bus de fluide (12 ; 44 ; 53) comportant plusieurs canaux (13 ; 45 ; 56) et la configuration d'au moins une partie des canaux (13) du bus de fluide (12 ; 44 ; 53) étant réglable dans les zones de sa liaison avec les unités de fluide (7) par l'intermédiaire de dispositifs de configuration (14 ; 41, 42, 43 ; 54, 55).

2. Système selon la revendication 1, **caractérisé par le fait que** les dispositifs de configuration sont conçus à chaque fois comme des adaptateurs (41, 42, 43) par l'intermédiaire desquels le module de processus respectif (38, 39, 40) peut être raccordé au bus de fluide (44). (figure 4)

3. Système selon la revendication 2, **caractérisé par le fait que** l'adaptateur (41, 42, 43) comporte une interface d'information (47) vers le module de processus raccordé (38, 39, 40) pour la transmission d'une information concernant la configuration réglée vers l'unité de commande (6) propre au module et que l'unité de commande (6) est conçue à chaque fois pour signaler cette information via le bus de données (10) à un dispositif de commande supérieur (17) et/ou aux unités de commande (6) dans les autres modules de processus respectifs (38, 39, 40).

4. Système selon la revendication 1, **caractérisé par le fait que** le bus de fluide (53) du système est formé par des tronçons de bus de fluide internes (51, 52) à l'intérieur des modules de processus juxtaposés (49, 50) et que les dispositifs de configuration sont conçus comme des modules de configuration (54, 55) qui peuvent être insérés dans la rangée des modules de processus (49, 50) entre des modules de processus individuels (49, 50). (figure 5)

5. Système selon la revendication 4, **caractérisé par le fait que** les modules de configuration (54, 55) comportent chacun une unité de signalisation de configuration (57) raccordée au bus de données (10) et destinée à la transmission d'une information concernant la configuration réglée via le bus de données (10) vers un dispositif de commande supérieur (17) et/ou vers les unités de commande (6) dans les modules de processus (49, 50).

6. Système selon la revendication 1, **caractérisé par le fait que** les dispositifs de configuration (14) font partie à chaque fois au moins de modules de processus individuels (1 à 5 ; 24 ; 32) et qu'ils peuvent être commandés pour le réglage de la configuration des canaux (13) du bus de fluide (12) par l'unité de commande (6) propre au module. (figure 1)

7. Système selon la revendication 6, **caractérisé par le fait que** les dispositifs de configuration (14) comportent des soupapes commandables (34) au long des canaux (13) du bus de fluide (12) et au long de dérivations de canal (33) vers l'unité de fluide respective (7).

8. Système selon la revendication 6 ou 7, **caractérisé par le fait que** les unités de commande (6) sont conçues à chaque fois pour signaler la configuration réglée des canaux (13) via le bus de données (10) à un dispositif de commande supérieur (17) et/ou aux unités de commande (6) dans les autres modules de processus respectifs (1 à 5 ; 24 ; 32).

9. Système selon la revendication 8, **caractérisé par le fait que** les unités de commande (6) sont conçues à chaque fois pour régler la configuration des canaux (13) en fonction des configurations signalées par les unités de commande (6) dans les autres modules de processus respectifs (1 à 5 ; 24 ; 32).

10. Système selon l'une des revendications 6 à 9, **caractérisé par le fait que** le bus de fluide (12) du système est formé par des tronçons de bus de fluide internes à l'intérieur des modules de processus juxtaposés (1 à 5 ; 24 ; 32).

11. Système selon l'une des revendications précédentes, **caractérisé par le fait que** des tronçons de canal individuels entre des modules de processus voisins peuvent être coupés par l'intermédiaire des dispositifs de configuration.

12. Système selon l'une des revendications précédentes, **caractérisé par le fait que** des canaux individuels entre différents modules de processus prescrits peuvent être occupés tronçon par tronçon avec un fluide par l'intermédiaire des dispositifs de configuration.

13. Système selon l'une des revendications précédentes, **caractérisé par le fait que** le bus de fluide est conçu au moins en partie selon la technique des microsystèmes.

14. Système selon l'une des revendications précédentes, **caractérisé par le fait que** les dispositifs de configuration sont conçus selon la technique des microsystèmes.

15. Système selon l'une des revendications précédentes, **caractérisé par le fait que** les modules de processus juxtaposés (1 à 5 ; 24, 32) sont fixés sur un support commun (23).
